# EUROPÄISCHE PATENTSCHRIFT

(11) **EP 1 319 560 B1**
(45) Veröffentlichungstag und Bekanntmachung des Hinweises auf die Patenterteilung: **29.03.2006**
(21) Anmeldenummer: 02027372.8
(22) Anmeldetag: 09.12.2002
(51) Int. Cl.: B60R 21/34, B60R 19/12, B60R 19/40

(54) **Kraftfahrzeug mit einer Sicherheitseinrichtung für Fussgänger**
Motor vehicle with a safety device for pedestrians
Véhicule automobile comportant un système de sécurité pour piétons

(30) Priorität: 14.12.2001 DE 10161873
(43) Veröffentlichungstag der Anmeldung: 18.06.2003
(73) Patentinhaber: Bayerische Motoren Werke Aktiengesellschaft, 80809 München (DE)
(72) Erfinder: Dockweiler, Achim, 81829 München (DE); Rathgeb, Christian, 85293 Reichertshausen (DE)

(56) Entgegenhaltungen:
- DE-A- 10 020 658
- DE-A- 10 059 203
- DE-A- 10 059 222
- DE-A- 19 918 202
- DE-A- 19 935 342
- GB-A- 2 316 371
- PATENT ABSTRACTS OF JAPAN vol. 2002, no. 03, 3. April 2002 (2002-04-03) -& JP 2001 322518 A (MAZDA MOTOR CORP), 20. November 2001 (2001-11-20)
- PATENT ABSTRACTS OF JAPAN vol. 1996, no. 11, 29. November 1996 (1996-11-29) -& JP 08 183423 A (TOYOTA MOTOR CORP;AISIN SEIKI CO LTD; TOYODA GOSEI CO LTD), 16. Juli 1996 (1996-07-16)
- PATENT ABSTRACTS OF JAPAN vol. 1995, no. 09, 31. Oktober 1995 (1995-10-31) -& JP 07 156749 A (TOYOTA MOTOR CORP;OTHERS: 01), 20. Juni 1995 (1995-06-20)

## Beschreibung

Die Erfindung betrifft ein Kraftfahrzeug mit einer Sicherheitseinrichtung für Fußgänger gemäß dem Oberbegriff des Anspruchs 1.

Aus der DE 100 20 658 A ist bereits ein die Gattung bildendes Kraftfahrzeug mit einer Sicherheitseinrichtung für Fußgänger bekannt. Nachdem ein zur Sicherheitseinrichtung gehörendes Sensorsystem ein vor einem vorderen Abschnitt einer Karosserie befindliches Hindernis erfasst hat und eine rechtzeitige Aktivierung der jeweils vorhandenen Anzahl an Gaskissen bewirkt hat, wird gleichzeitig ein vorderer Teilabschnitt der Karosserie von der Karosserie getrennt, so dass ein Zwischenraum zwischen dem vorderen Teilabschnitt und der übrigen Karosserie entsteht. Entsprechend dem vorgesehenen Zwischenraum ist das Gaskissen beabstandet zu einem Stoßfänger in einem Abschnitt einer Fronthaube vorgesehen, um im aktivierten Zustand des Gaskissens den Zwischenraum überdecken zu können. In diesem Zwischenraum kann beispielsweise ein weiteres Gaskissen zur Dämpfung und/oder Abstützung angeordnet sein, das gleichzeitig mit dem als Aufprallschutz für einen Fußgänger dienende Gaskissen aktiviert ist.

Aus der DE 41 14 016 A1 ist bereits eine Sicherheitseinrichtung für ein Kraftfahrzeug bekannt, bei der ein aufblasbares Gaskissen als Aufprallschutz dient. Durch diesen Aufprallschutz wird die Verletzungsgefahr für Fußgänger, Radfahrer, usw. bei einem Zusammenstoß mit dem Kraftfahrzeug vermindert. Die Aktivierung des Gaskissens wird durch Sensoren gesteuert. Mindestens ein Gaskissen wird an einem Vorderbau und/oder an einem Heck eines Kraftfahrzeuges vor dem Aufprall auf ein Hindernis aufgeblasen. Im aufgeblasenen Zustand der Gaskissen wird eine Stirnseite des Vorderbaus oder des Hecks des Kraftfahrzeuges abgedeckt.

Aufgabe der Erfindung ist es, ein Kraftfahrzeug mit einer Sicherheitseinrichtung für Fußgänger zu schaffen, die einen einfachen Aufbau aufweist.

Diese Aufgabe wird durch die Merkmale des Anspruchs 1 gelöst.

Die erfindungsgemäße Sicherheitseinrichtung weist mindestens ein aufblasbares Gaskissen auf, das im aufgeblasenen Zustand mindestens einen sicherheitsrelevanten, vorderen Bereich eines Deckels oder einer Haube abdeckt. Der sicherheitsrelevante Bereich ergibt sich in Fahrzeuglängsrichtung dadurch, dass zumindest ein Kopf- und Schulterbereich eines Erwachsenen geschützt ist, wenn der Erwachsene mit seinem Oberkörper auf die Haube auftrifft. In Fahrzeugquerrichtung erstreckt sich das aufgeblasene Gaskissen erfindungsgemäß über die gesamte Breite des Deckels oder der Haube. Die Haube kann die Abdeckung für einen Motor sein.

Durch die erfindungsgemäße Anordnung von mindestens zwei aufblasbaren Gaskissen in einem Bereich vor der Haube können die Behälter zur Aufbewahrung der Gaskissen kleiner ausgelegt werden.

Die vorhandene Anzahl an aufblasbaren Gaskissen ist platzsparend und unauffällig unter einer verschiebbaren Stoßfänger-Verkleidung angeordnet.

Durch entsprechende pyrotechnische oder hydraulische Vorrichtungen kann ein Behälter, in dem sich ein aufblasbares Gaskissen befindet, mit der erforderlichen Schnelligkeit aus einer Ruheposition in eine Zündposition gebracht werden.

Vorteilhafterweise sind Sensoren zum Erkennen eines Hindernisses vor dem Kraftfahrzeug in der verschiebbaren Stoßfängerverkleidung integriert.

In einer vorteilhaften Ausführungsform ist das jeweilige, aufblasbare Gaskissen so groß ausgebildet, dass auch an den beiden Seitenbereichen des vorderen Abschnittes der Karoserie jeweils eine Aufprallfläche zur Verfügung steht.

Eine Ausführungsform der Erfindung wird nachstehend anhand der Zeichnungen beispielshalber beschrieben. Dabei zeigen:
- Fig. 1: eine Seitenansicht eines vorderen Abschnittes eines teilweise dargestellten Kraftfahrzeuges, mit einem aufgeblasenen Gaskissen, das sich zwischen einer Stoßstange und einer Haube erstreckt und
- Fig. 2: eine perspektivische Darstellung auf den vorderen Abschnitt des in der Fig. 1 gezeigten Kraftfahrzeuges, bei dem ein aufgeblasenes Gaskissen den vorderen Abschnitt des Kraftfahrzeuges vollständig in Fahrzeugquerrichtung und in Fahrzeuglängsrichtung zwischen der Stoßstange und einem überwiegenden Abschnitt der Haube oder dergleichen überdeckt.

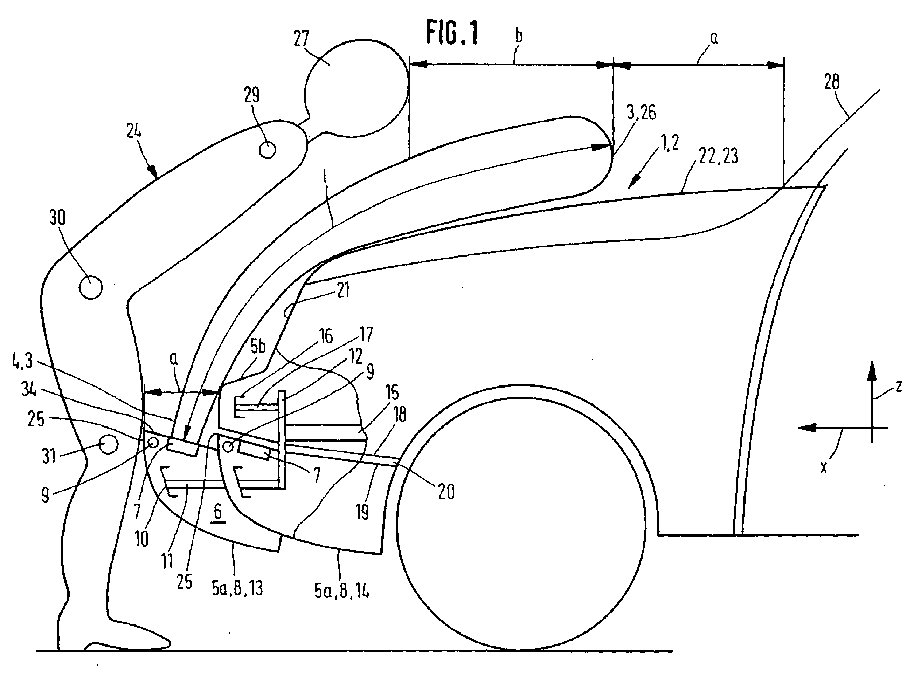

Die Fig. 1 zeigt einen vorderen Abschnitt 2 eines Kraftfahrzeuges 1 mit einem aufgeblasenen Gaskissen 3. Ein unteres Ende 4 des Gaskissens 3 ist in einem in Fahrzeuglängsrichtung x verschobenen, unteren Abschnitt 5a eines Stoßfängers 5 angeordnet. An einer Verkleidung 8 des Stoßfängers 5 sind nach außen gerichtete Sensoren 9 vorgesehen.

In der gezeigten Ausführungsform ist in einem Hohlraum 6 des Stoßfängerabschnittes 5a ein nach oben hin offener Behälter 7 ausgebildet. In dem verschiebbaren unteren Stoßfängerabschnitt 5a ist ferner ein Querträger 10 über eine Verschiebevorrichtung 11 beispielsweise an einer Prallplatte 12 angeordnet.

Die Verschiebevorrichtung 11 kann ein in einer Führung verschiebbarer Kolben sein, der über geeignete Mittel, wie beispielsweise Sprengstoff, in die ausgefahrene Position 13 aus der Ruheposition 14 bewegbar ist. Die Führung ist beispielsweise ein Zylinder. Die Prallplatte 12 ist beispielsweise an einem Längsträger 15 befestigt.

In der gezeigten Ausführungsform ist der Stoßfänger 5 zweiteilig in den unteren, verschiebbaren Stoßfänger 5a und in einen darüber angeordneten starr ausgebildeten Stoßfänger 5b aufgeteilt. Der starre Stoßfänger 5b weist ebenfalls einen Querträger 16 auf, der über ein Verbindungselement 17 mit der Prallplatte 12 verbunden ist. Zwischen einer Unterseite 18 des starren Stoßfängers 5b und einer Oberseite 19 des verschiebbaren Stoßfängers 5a ist ein umlaufender Spalt 20 ausgebildet.

Das aufgeblasene Gaskissen 3 überdeckt in der gezeigten Ausführungsform eine Stirnseite 21 sowie einen überwiegenden Abschnitt einer Oberseite 22 des vorderen Abschnittes 2 des Kraftfahrzeuges 1. In der gezeigten Ausführungsform ist die Oberseite 22 mit einer Haube 23, beispielsweise für einen Motor, versehen.

Sobald ein Fußgänger 24 oder ein weiterer Verkehrsteilnehmer oder ein Hindernis einen Mindestabstand zu den Sensoren 9 unterschreitet, wird der untere, verschiebbare Stoßfänger 5a in die ausgefahrene Position 13 bewegt, wobei ein vorderes Ende 25 des unteren Stoßfängers 5a um eine Strecke a in Fahrzeugslängsrichtung x verschoben ist. Ein oberes Ende 26 des aufgeblasenen Gaskissens 3 ist von einem Kopf 27 des Fußgängers 24 vor einem Aufprall des Kopfes 27 auf das Gaskissen 3 um eine Strecke b beabstandet. Ferner weist das obere Ende 26 des aufgeblasenen Gaskissens 3 einen Abstand c zu einem unteren Ende einer Windschutzscheibe 28 auf.

In der schematisch dargestellten Person 24 sind durch Kreise 29, 30, 31 das Schultergelenk, das Hüftgelenk sowie das Kniegelenk dargestellt. Durch das aufgeblasene Gaskissen 3 werden neben dem Kopf 27 der Person 24 zumindest die Schultergelenke 29 und die Hüftgelenke 30 bei einem Aufprall auf das Kraftfahrzeug 1 durch das aufgeblasene Gaskissen 3 aufgefangen.

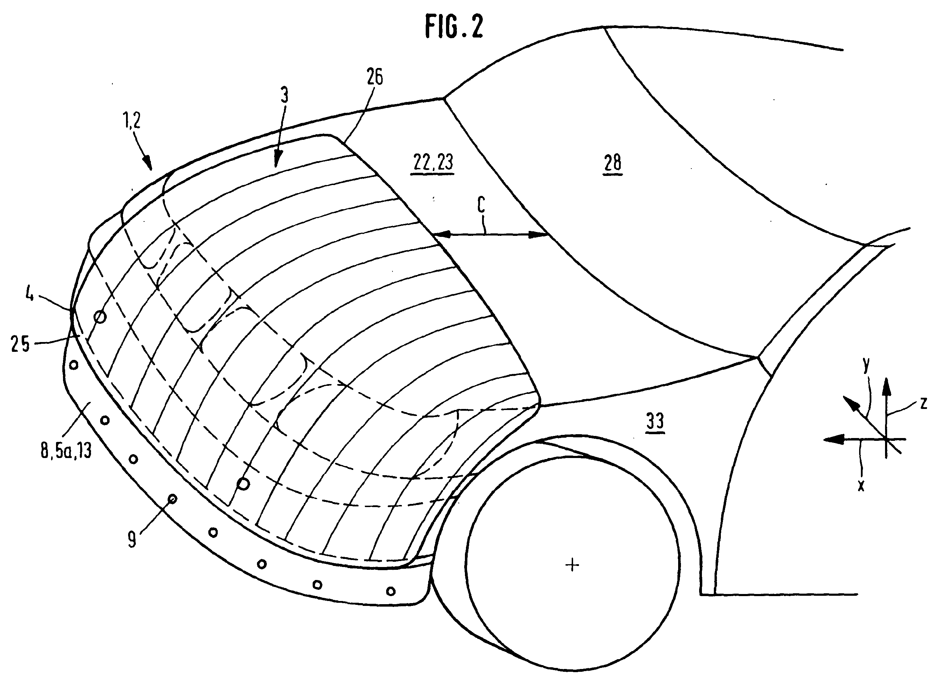

Die Fig. 2 zeigt eine perspektivische Darstellung des vorderen Abschnittes 2 des Kraftfahrzeuges 1. Das aufgeblasene Gaskissen 3 überdeckt den vorderen Abschnitt 2 über die gesamte Fahrzeugbreite in Fahrzeugquerrichtung y. In der gezeigten Ausführungsform deckt das aufgeblasene Gaskissen 3 auch Seitenbereiche 33 des vorderen Abschnittes 2 des Kraftfahrzeuges 1 ab. Die Seitenbereiche 33 umfassen z. B. die Beleuchtungsmittel und die Kotflügel.

In der Verkleidung 8 des unteren Stoßfängers 5a sind eine Vielzahl von Sensoren 9 angeordnet, die beim Erkennen eines Hindernisses bei einem vorgegebenen, geschwindigkeitsabhängigen Mindestabstand ein Signal bewirken. Durch das Signal wird der untere Stoßfänger 5a aus der Ruheposition 14 in Fahrzeuglängsrichtung x nach vorne verschoben. Beim Erreichen der ausgefahrenen Position 13 des unteren Stoßfängers 5a erfolgt die Befüllung des Gaskissens 3.

In der gezeigten Ausführungsform ist das obere Ende 26 des aufgeblasenen Gaskissens 3 um einen Abstand c von einem unteren Ende der Windschutzscheibe 28 entfernt. Der Abstand c ergibt sich aus einer Länge I zwischen dem unteren Ende 4 und dem oberen Ende 26 des aufgeblasenen Gaskissens 3 sowie aus dem Abstand b zwischen dem oberen Ende 26 des aufgeblasenen Gaskissens 3 und einer möglichen Aufprallstelle eines Kopfes 27 auf dem Gaskissen 3.

## Patentansprüche

1. Kraftfahrzeug (1) mit einer Sicherheitseinrichtung für Fußgänger, wobei an einem vorderen Abschnitt (2) einer Karosserie eine Haube (23) vorgesehen ist, die sich zwischen einer Windschutzscheibe (28) und einer Stoßfängervorrichtung (5, 5a, 5b) erstreckt, mit einer Sicherheitseinrichtung, die mindestens ein aufblasbares Gaskissen (3) und eine dazugehörige Befüllvorrichtung aufweist, mit einem Sensorsystem, dessen Sensoren (9) am vorderen Abschnitt (2) der Karosserie angeordnet sind, wobei das Sensorsystem ein vor dem vorderen Abschnitt (2) der Karosserie befindliches Hindernis erfasst und eine rechtzeitige Aktivierung der jeweils vorhandenen Anzahl an Gaskissen (3) bewirkt, wobei die vorhandene Anzahl an Gaskissen (3) im aufgeblasenen Zustand zumindest einen vorderen Bereich der Haube (23) so abdeckt, dass sich die vorhandene Anzahl an aufgeblasenen Gaskissen (3) in Fahrzeugquerrichtung y zumindest über die gesamte Breite der Haube (23) und in Fahrzeuglängsrichtung x mindestens soweit erstreckt, dass bei einem Zusammenstoß mit einem Fußgänger (24) oder dgl. ein Kopf (27) des Fußgängers (18) vor einem oberen Ende (26) des Gaskissens (3) auf das Gaskissen (3) trifft,
**dadurch gekennzeichnet, dass** an einer Stirnseite (21) des vorderen Abschnittes (2) ein in Fahrzeuglängsrichtung x verschiebbarer Abschnitt (5a) vorgesehen ist und dass in dem Abschnitt (5a) mindestens ein aufblasbares Gaskissen (3) angeordnet ist.

2. Kraftfahrzeug nach Anspruch 1,
**dadurch gekennzeichnet, dass** der verschiebbare Abschnitt (5a) ein Bestandteil des Stoßfängersystems (5) ist.

3. Kraftfahrzeug nach den Ansprüchen 1 oder 2,
**dadurch gekennzeichnet, dass** der verschiebbare Abschnitt (5a) pyrotechnisch oder hydraulisch in die ausgefahrene Position (13) bringbar ist.

4. Kraftfahrzeug nach einem der vorhergehenden Ansprüche,
**dadurch gekennzeichnet, dass** das Gaskissen (3) im aufgeblasenen Zustand zusätzlich seitliche Bereiche (33) des vorderen Abschnittes (2) abdeckt.

5. Kraftfahrzeug nach einem der vorhergehenden Ansprüche 2 bis 4,
**dadurch gekennzeichnet, dass** die Sensoren (9) am verschiebbaren Abschnitt (5a) des Stoßfängers (5) angeordnet sind.

6. Kraftfahrzeug nach einem der vorhergehenden Ansprüche 2 bis 5,
**dadurch gekennzeichnet, dass** das aufgeblasene Gaskissen (3) sich von einer Oberseite (34) des verschiebbaren Abschnittes (5a) des Stoßfängers (5) über eine Stirnseite (21) des vorderen Abschnittes (2) über eine Länge I bis auf die Haube (23) des vorderen Abschnittes (2) erstreckt.

7. Kraftfahrzeug nach einem der vorhergehenden Ansprüche,
**dadurch gekennzeichnet, dass** sich die Länge I und Form des aufgeblasenen Gaskissens (3) aus der Länge und Form des vorderen Abschnittes (2) und einer möglichen Aufprallstelle eines Kopfes (27) einer Person (18) ergibt.

## Claims

1. A motor vehicle (1) comprising a safety device for pedestrians, wherein a bonnet (23) extending between a windscreen (28) and a bumper device (5, 5a, 5b) is provided on a front portion (2) of a vehicle body, also comprising a safety device consisting of at least one inflatable gas cushion (3) and an associated filling device, and a sensor system with sensors (9) disposed on the front portion (2) of the body, wherein the sensor system detects an obstacle in front of the front portion (2) of the body and promptly activates the available number of gas cushions (3), wherein the available number of gas cushions (3), when inflated, cover at least a front region of the bonnet (23) to an extent such that the available number of inflated gas cushions (3) extends at least over the width of the bonnet (23) in the transverse direction of the vehicle (y) and extends in the longitudinal direction (x) of the vehicle at least so far that in the event of a collision with a pedestrian (24) or the like, a head (27) of the pedestrian (18) strikes the gas cushion in front of a top end (26) of the gas cushion (3),
**characterised in that** a portion (5a) movable in the longitudinal direction (x) of the vehicle is provided on a front surface (21) of the front portion (2), and at least one inflatable gas cushion (3) is disposed in the portion (5a).

2. A vehicle according to claim 1,
**characterised in that** the movable portion (5a) is a component of the bumper system (5).

3. A vehicle according to claim 1 or claim 2,
**characterised in that** the movable portion (5a) can be brought into the extended position (13) by pyrotechnic or hydraulic means.

4. A vehicle according to any of the preceding claims,
**characterised in that** the gas cushion (3), when inflated, additionally covers lateral regions (33) of the front portion (2).

5. A vehicle according to any of the preceding claims 2 to 4,
**characterised in that** the sensors (9) are mounted on the movable portion (5a) of the bumper (5).

6. A vehicle according to any of the preceding claims 2 to 5,
**characterised in that** the inflated gas cushion (3) extends from a top (34) of the movable portion (5a) of the bumper (5) over a front surface (21) of the front portion (2) for a length (I) up to the bonnet (23) of the front portion (2).

7. A vehicle according to any of the preceding claims,
**characterised in that** the length (I) and shape of the inflated gas cushion (3) depend on the length and shape of the front portion (2) and a possible place of collision with a head (27) of a person (18).

## Revendications

1. Véhicule automobile (1) comprenant un dispositif de sécurité pour piétons, un capot (23) étant prévu au niveau d'une section avant (2) d'une carrosserie, le capot s'étendant entre un pare-brise (28) et un pare-chocs (5, 5a, 5b), comprenant un dispositif de sécurité ayant au moins un coussin de sécurité gonflable (3) et un dispositif de remplissage associé, avec un système de détection dont les capteurs (9) sont disposés au niveau de la section avant (2) de la carrosserie, le système de détection détectant un obstacle situé à l'avant de celle-ci et entraînant une activation immédiate des coussins de sécurité gonflables (3) disponibles qui, gonflés, recouvrent au moins une zone avant du capot (23) de telle sorte que les coussins de sécurité gonflés (3), dans la direction transversale y du véhicule, s'étendent au moins sur toute la largeur du capot (23) et, dans la direction longitudinale x du véhicule, au moins jusqu'à ce que, lors d'une collision avec un piéton (24) ou analogue, la tête (27) du piéton (18) heurte le coussin de sécurité (3) avant son extrémité supérieure (26),
**caractérisé en ce qu'**
au niveau d'un côté frontal (21) de la section avant (2) se trouve une section (5a) mobile dans la direction longitudinale x du véhicule et dans la section (5a) est disposé au moins un coussin de sécurité gonflable (3).

2. Véhicule automobile selon la revendication 1,
**caractérisé en ce que**
la section mobile (5a) est un composant du pare-chocs (5).

3. Véhicule automobile selon les revendications 1 ou 2,
**caractérisé en ce que**
la section mobile (5a) peut être amenée en position sortie (13) par des moyens pyrotechniques ou hydrauliques.

4. Véhicule automobile selon l'une quelconque des revendications précédentes,
**caractérisé en ce que**
le coussin de sécurité (3), gonflé, recouvre en outre des zones latérales (33) de la section avant (2).

5. Véhicule automobile selon l'une quelconque des revendications précédentes 2 à 4,
**caractérisé en ce que**
les capteurs (9) sont disposés au niveau de la section mobile (5a) du pare-chocs (5).

6. Véhicule automobile selon l'une quelconque des revendications précédentes 2 à 5,
**caractérisé en ce que**
le coussin de sécurité gonflable (3) s'étend sur une longueur ℓ d'un côté supérieur (34) de la section mobile (5a) du pare-chocs (5), sur un côté frontal (21) de la section avant (2), jusqu'au capot (23) de la section avant (2).

7. Véhicule automobile selon l'une quelconque des revendications précédentes,
**caractérisé en ce que**
la longueur ℓ et la forme du coussin de sécurité gonflé (3) résultent de la longueur et de la forme de la section avant (2) et du point d'impact possible de la tête (27) d'une personne (18).
